# EUROPÄISCHE PATENTSCHRIFT

(11) **EP 2 132 072 B1**
(45) Veröffentlichungstag und Bekanntmachung des Hinweises auf die Patenterteilung: **30.11.2016**
(21) Anmeldenummer: 08734765.4
(22) Anmeldetag: 26.03.2008
(51) Int. Cl.: B60T 17/08

(54) **KOMPAKT-KOMBIZYLINDER FÜR FAHRZEUGBREMSEN MIT STEUERUNGSVORRICHTUNG UND VERFAHREN ZUR ANSTEUERUNG DES BREMSZYLINDERS**
COMPACT COMBINATION CYLINDER FOR VEHICLE BRAKES, COMPRISING A CONTROL DEVICE, AND METHOD FOR CONTROLLING THE BRAKE CYLINDER
CYLINDRE COMBINÉ COMPACT DESTINÉ À DES FREINS DE VÉHICULES, COMPORTANT UN DISPOSITIF DE COMMANDE, ET PROCÉDÉ DE COMMANDE DU CYLINDRE DE FREIN

(30) Priorität: 27.03.2007 DE 102007015211
(43) Veröffentlichungstag der Anmeldung: 16.12.2009
(73) Patentinhaber: KNORR-BREMSE Systeme für Nutzfahrzeuge GmbH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2008/002364
(87) Internationale Veröffentlichungsnummer: WO 2008/116630

(56) Entgegenhaltungen:
- WO-A-2006/005898
- DE-A1-102005 044 708

## Beschreibung

Die Erfindung betrifft einen Bremszylinder für pneumatisch betätigte Fahrzeugbremsen, insbesondere für Nutzfahrzeuge, nach dem Oberbegriff des Anspruchs 1 und ein Verfahren zur Ansteuerung des Bremszylinders.

Die Feststellbremse wird bei schweren Nutzfahrzeugen mittels so genannter Federspeicherzylinder betätigt. Die Bremsbetätigungskraft wird hierbei über eine gespannte Feder erzeugt, so dass den Anforderungen an eine mechanisch wirkende Feststellbremse genüge getan ist.

Da die Federspeicherzylinder in der Regel dazu ausgelegt sind, sehr hohe Kräfte zu erzeugen, ist ein manuelles Lösen im Betriebsfall nicht mehr sinnvoll. Das Lösen der Feststellbremse geschieht daher bei pneumatisch betätigten Bremsen mittels Druckluft.

Um dies zu ermöglichen, sind Federspeicherzylinder in der Regel mit einem Lösekolben ausgerüstet. Mit diesem Kolben ist es möglich, bei einer Einleitung von Druckluft die Feder soweit zusammen zu drücken, bis die Bremse gelöst ist. Damit die Feststellbremse während der Fahrt nicht eingelegt ist, wird der Kolben ständig mit Druckluft beaufschlagt, so dass sich die Feder nicht entspannen kann und somit die Feststellbremse nicht zur Wirkung kommt.

Die üblichste Bauform ist der so genannte Kombizylinder. Ein Kombizylinder besteht aus bzw. kombiniert zwei verschiedene Bremszylinderarten, nämlich einem Federspeicherzylinder für die Feststellbremsanlage (FBA) und einem Druckluftzylinder (meist einen Membranzylinder) für die Betriebsbremsanlage (BBA).

Üblicherweise sind die beiden Zylinder hintereinander, in axialer Richtung angeordnet. Hinter dem Membranteil des Kombizylinders ist der Federspeicherteil angeordnet, welcher mit seiner Kolbenstange auf den Kolbenteller des Membranzylinders und von diesem auf den Bremshebel wirkt.

Diese Bauform benötigt relativ viel Bauraum. Durch die Einführung aufwendigerer Fahrwerkssysteme, wie z.B. Einzelradaufhängungen, Leichtbauachsen etc wird der Bauraum jedoch zunehmend limitiert.

Es gibt daher Bestrebungen, durch andere Bauformen und Wirkungsweisen den Platzbedarf für den Feststellbremszylinder zu minimieren.

Eine kompaktere Bauform bietet insofern der so genannte Kompaktkombizylinder. Einen derartigen Bremszylinder offenbart die DE 10 2005 044 708 A1. Nach dieser Erfindung wird die Funktion des Feststellbremszylinders direkt in den Betriebsbremszylinder integriert. Die Federspeicherfeder wird hierbei nicht mehr über einen separaten Federspeicherkolben betätigt sondern ebenfalls über den Kolben des Betriebsbremszylinders. Um die Feststellbremse zu lösen, wird für eine kurze Zeitspanne der BBA-Kolben mittels einer speziellen Ansteuerung mit Druckluft beaufschlagt.

Aus der WO 2006/005898 A1 ist ein Kombinationsbremszylinder für Fahrzeugbremsen mit Federspeicher bekannt, bei dem auch die ABS-Ventile zur Ansteuerung des Bremszylinders integriert sind.

Wie vorstehend beschrieben, erfolgt das Lösen der Feststellbremse im Regelfall mit Hilfe von Druckluft. Daneben muss es aber auch möglich sein, die Feststellbremse bei einem Druckverlust durch einen manuellen Vorgang zu lösen.

Bei konventionellen Kombizylindern wird dazu die Feder mit Hilfe einer Gewindespindel (der so genannten Lösespindel) zurückgezogen. Die Funktion des Betriebsbremszylinders ist dadurch nicht beeinträchtigt.

Beim Kompaktkombizylinder kann dies nicht auf so einfache Weise dargestellt werden, da der BBA-Kolben und die Federspeicherfeder mit einander verbunden sind. Würde man die Feder durch eine von außen zugängliche Gewindespindel zurückziehen, wäre auch der BBA-Kolben blockiert und folglich auch die Funktion des BBA-Zylinders nicht mehr gegeben.

Zum manuellen Lösen der Federspeicherfeder ist daher eine manuell betätigbare Lösevorrichtung vorteilhaft, die es ermöglicht, die Federspeicherwirkung bei Druckverlust ohne Beeinträchtigung der BBA-Funktion aufzuheben. Ferner ist es möglich, nach dem Lösevorgang die FBA-Wirkung durch einen manuellen Vorgang wieder herzustellen. Die Lösevorrichtung eignet sich insbesondere auch für KompaktKombizylinder, die eine Gewindespindel mit einem nicht selbst hemmenden Steilgewinde aufweisen. Das Steilgewinde dient in erster Linie dafür, die Federspeicherfeder in der so genannten Lösestellung arretieren zu können. Dazu wird die Gewindespindel mittels eines pneumatisch betätigten Sperrmechanismus festgesetzt. Beim Einlegen der Feststellbremse wird der Sperrmechanismus entlüftet, wodurch sich die Gewindespindel drehen und die Federspeicherfeder entspannen kann. Vorzugsweise wird die Gewindespindel auch zum manuellen Lösen der Federspeicherfeder genutzt. Dabei wird die Gewindespindel durch eine externe Krafteinleitung in Drehung versetzt. Da es sich hierbei um ein nicht selbst hemmendes Steilgewinde handelt, würde z.B. beim Umsetzen des Schraubenschlüssels die Spindel sofort wieder zurückdrehen und die Federspeicherfeder somit wieder zur Wirkung kommen.

Für die Ansteuerung eines Bremszylinders der gattungsgemäßen Art sind separate Elemente zusätzlich zur üblichen Bremsteuerungsanlage erforderlich, was einen Nachteil bedeutet.

Die Lösung dieses Problems ist die Aufgabe der Erfindung.

Die Erfindung löst diese Aufgabe durch den Gegenstand des Anspruchs 1. Sie schafft ferner das Verfahren des Anspruchs 13 zur Ansteuerung des Bremszylinders

Durch die Integration aller oder wenigstens einiger der Bauteile bzw. Elemente zur speziellen Ansteuerung des Kompaktkombizylinders kann die geforderte Unabhängigkeit dargestellt werden.

Die Erfindung integriert vorzugsweise sämtliche zusätzlich notwendigen Elemente direkt in den Kompakt-Bremszylinder. Sie schafft damit eine verbesserte Zylindersteuerung, die außerhalb des Zylinders im Grunde keine spezielle Ventilarchitektur am übrigen Fahrzeugbremssystem erfordert, so dass der bekannte Aufbau der Ventilarchitektur an sich beibehalten werden kann, da alle zusätzlichen Elemente in den Zylinder integriert sind.

Vorzugsweise wird der Bremszylinder zur Ansteuerung lediglich um rein pneumatisch/mechanische Elemente ergänzt und es wird der Einsatz von elektronischen Steuerkomponenten vermieden, um eine von der Bordspannung unabhängige Funktion zu gewährleisten. Auf diese Weise ist es möglich, die Steuerung derart auszulegen, dass auch ohne eine Stromversorgung des Zylinders sämtliche unterschiedliche Betriebssituationen realisierbar sind.

Weitere Varianten der Erfindung sind den Unteransprüchen zu entnehmen.

Nachfolgend wird die Erfindung unter Bezug auf die Zeichnung anhand eines Ausführungsbeispiels näher erläutert. Es zeigen:
- Figur 1: den erfindungsgemäßen Bremszylinder im Halbschnitt, in der Lösestellung und in der Feststellbremsstellung;
- Fig. 2: eine Detailansicht aus Fig. 1;
- Fig. 3 bis 6: eine teilgebrochene Darstellung von Elementen einer manuell betätigbaren Lösevorrichtung des Kompaktbremszylinders aus Fig. 1 und 2 in verschiedenen Betriebszuständen;
- Fig. 7: einen um pneumatische Funktionselemente wie Ventile ergänzten Bremszylinder nach Art der Fig. 1;
- Fig. 8-11: schaltbildartige Darstellungen der Verknüpfung von Funktionselementen des Bremszylinders aus Fig. 7 in verschiedenen Betriebszuständen;
- Fig. 12, 13: alternative Ausgestaltungen von Komponenten der Fig. 8; und
- Fig 14: 7eine Ausschnittsvergrößerung aus Fig. 7.

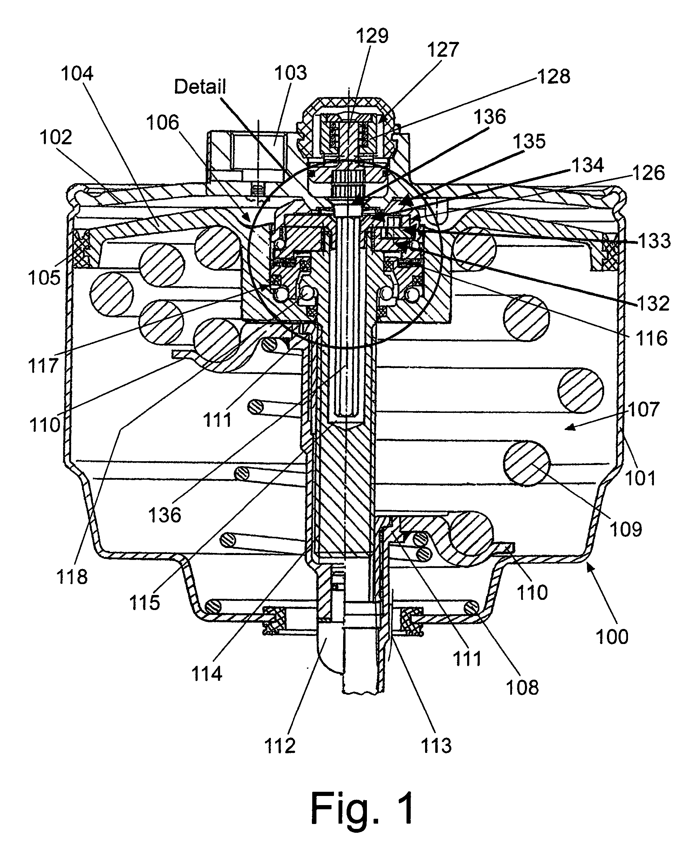

Fig. 1 zeigt einen Schnitt durch einen erfindungsgemäßen Kompaktbremszylinder 100, wobei in der linken Hälfte der Zeichnung der Federspeicher in gelöster Stellung und in der rechten Hälfte der Zeichnung der Federspeicher in eingelegter Stellung dargestellt ist.

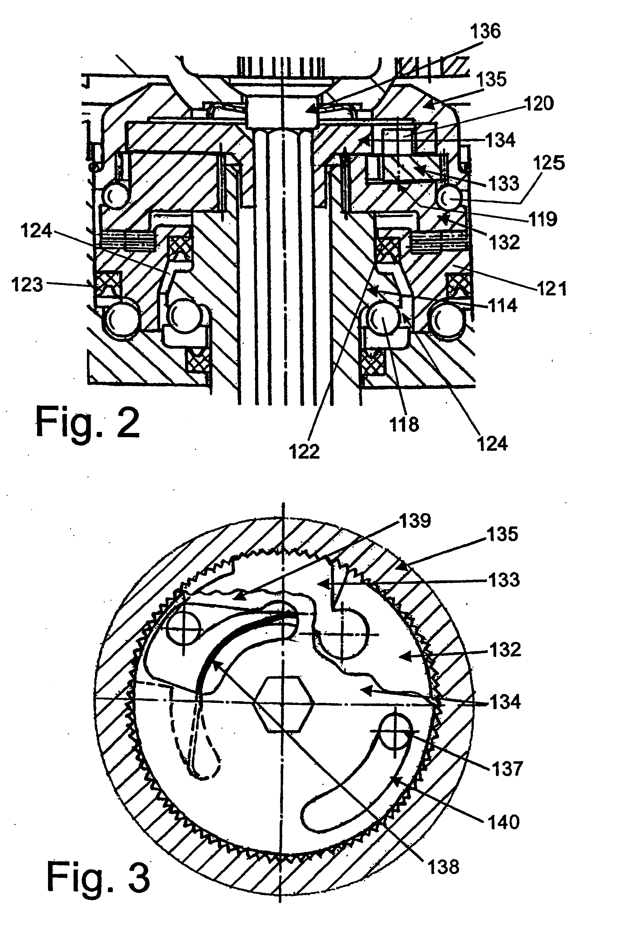

Der in den Figuren 1 bis 3 dargestellte Bremszylinder 100 weist ein topfförmiges - vorzugsweise im Wesentlichen zylindrisches - Gehäuse 101 auf.

Das Gehäuse 101 ist an einem seiner Enden von einem Deckel 102 verschlossen, der mit wenigstens einem oder mehreren Druckluftanschlüssen 103 versehen ist.

In dem topfförmigen Gehäuse 101 ist ein Kolben 104 mit einem Kolbendichtring 105 angeordnet, dessen Durchmesser samt dem Kolbendichtring 105 dem Innendurchmesser des Gehäuses 101 entspricht.

Der Kolben 104 kann durch den Druckluftanschluss 103 mit Druckluft beaufschlagt werden, die auch durch diesen Anschluss ausströmen kann.

Wie Fig. 1 zeigt, ist der Kolben 104 im mittleren Bereich abgesenkt, so dass ein Druckraum 106 entsteht.

Durch den Kolben 104 wird noch ein weiterer Raum 107 begrenzt, in den eine kegelige Rückholfeder 108 und eine Federspeicherfeder 109 eingesetzt ist.

Die Federspeicherfeder 109 ist zwischen den Kolben 104 und einen federtellerartigen Federspeicherkolben 110 gesetzt, dessen Durchmesser kleiner ist als der Innendurchmesser des Gehäuses.

Die Rückholfeder 108 ist zwischen die von der Federspeicher abgewandte Seite des Federspeicherkolbens 110 und den vom Deckel abgewandte inneren Endbereich des Gehäuses 101 gesetzt.

Der Federspeicherkolben 104 liegt an seinem Innenumfang auf einem Kragen 111 einer Kolbenstange 112, die eine im Gehäuse 101 auf dessen vom Deckel 102 abgewandten Ende ausgebildete Öffnung 113 durchsetzt und zur Betätigung einer Zuspannvorrichtung einer Bremse dient.

Ein pneumatisch betätigbarer Sperrmechanismus 116 ist in einem mittigen Aufnahmeraum 117 des Kolben 104 an dessen zum Deckel 102 gewandten Seite des Kolbens 104 untergebracht, welcher den Sperrmechanismus aufnimmt.

Die Kolbenstange 112 ist hülsenförmig gestaltet und mit einem Innengewinde versehen, in dass eine mit Außengewinde versehene Gewindespindel 114 eingreift. Die Gewindespindel 114 ist nicht selbsthemmend ausgelegt. Sie ist vorzugsweise an einem ihrer Enden direkt oder über Zwischenelemente mit dem pneumatisch betätigbaren Sperrmechanismus gekoppelt, der hier in Form einer pneumatisch betätigbaren Kupplung oder Bremse ausgebildet ist. Im dargestellten Ausführungsbeispiel ist dieser Sperrmechanismus als formschlüssige Kupplung 116 ausgebildet.

Die Kupplung 116 ist hier in vorteilhafter und kompakt bauender Weise zwischen den Axialflächen einer noch zu erläuternden Lagerscheibe 132, die mit der Gewindespindel drehfest gekoppelt ist, und einem Sperrmechanismuskolben 121 ausgebildet.

Der Sperrmechanismuskolben 121 ist an seinem Innen- und seinem Außenumfang mittels Kolbenringdichtungen 122, 123 gegen die Gewindespindel 114 und den Aufnahmeraum 117 abgedichtet.

Der Sperrmechanismuskolben 121 ist über einen Druckraum 124 über eine Druckluftleitung (hier nicht dargestellter Weise) mit Druckluft beaufschlagbar, wodurch die Kupplung 116 in Eingriff gebracht werden kann. Die Gewindespindel 114 ist entsprechend durch Druckluftbeaufschlagung des Druckraums 124 unterhalb des Sperrmechanismuskolbens 121 an Drehungen gehindert, so dass die FBA-Bremse außer Funktion setzbar ist.

Die Gewindespindel 114 ist über Wälzkörper 118 am Kolben 104 abgestützt.

In der linksseitigen Stellung der Fig. 1 ist die Kupplung 116 geschlossen bzw. die pneumatisch betätigbare Sperrvorrichtung aktiviert, so dass die Gewindespindel 114 gegen Drehungen gesichert ist.

Soll nun der Federspeicherkolben 110 in die in der rechtsseitigen Darstellung der Fig. 1 dargestellte Feststellbremsstellung überführt werden, wird die von dem Sperrmechanismuskolben 121 in die Kupplung 116 geleitete Kraft durch Druckabsenkung im Raum 124 verringert, so dass die von der Federspeicherfeder 109 aufgebrachte Kraft bewirkt, dass sich die Gewindespindel 114 dreht, wobei der Federspeicherkolben 110 mit der Kolbenstange 112 in der Bremsposition verschoben wird.

Die Drehzahl ist durch die Bremskraft der Kupplung 116 regelbar, so dass auch die lineare Bewegung des Federspeicherkolbens 110 gesteuert werden kann.

Zum Lösen der Bremsstellung wird entsprechend der vorherigen Ausführung der Druckraum 106 mit Druck beaufschlagt. Da der Feststellbremskolben 121 jetzt drucklos ist, kann sich die Gewindespindel 114 verdrehen und der Federspeicherkolben 110 wird entgegen der Wirkung der Federspeicherfeder 109 in die Ausgangsstellung zurückgefahren.

Bei Betriebsbremsungen bleibt die Kupplung 116 in Bremsstellung, so dass die beiden Kolben 104, 110 gemeinsam in die Bremsstellung bewegt werden, ohne ihre relative Stellung zueinander zu verändern. Die Wirkung der Federspeicherfeder 109 kann sich in diesem Zustand nicht entfalten. Analoges gilt für das Lösen der Bremse nach Betriebsbremsungen.

Bei dem Kompaktkombizylinder 100 ist die Funktion des Feststellbremszylinders in den Betriebsbremszylinder integriert. Die Federspeicherfeder 109 wird hierbei nicht mehr über einen separaten Federspeicherkolben betätigt sondern über den Kolben 104 des Betriebsbremszylinders. Um die Feststellbremse zu lösen, wird für eine kurze Zeitspanne der BBA-Kolben mittels einer speziellen Ansteuerung mit Druckluft beaufschlagt.

Wie vorstehend beschrieben, erfolgt das Lösen der Feststellbremse bzw. des Feststellbremsabschnittes im Regelfall mit Hilfe von Druckluft.

Daneben ist es erfindungsgemäß aber auch möglich, den Feststellbremsabschnitt bei einem Druckverlust manuell mit einer manuell betätigbaren Lösevorrichtung zu lösen.

Bei konventionellen Kombizylindern wird dazu die Feder mit Hilfe einer Gewindespindel (der so genannten Lösespindel) zurückgezogen. Die Funktion des Betriebsbremszylinders ist dadurch nicht beeinträchtigt.

Beim Kompaktkombizylinder kann dies nicht auf so einfache Weise dargestellt werden, da der BBA-Kolben und die Federspeicherfeder mit einander verbunden sind. Würde man die Federspeicherfeder 109 durch eine von außen zugängliche Gewindespindel zurückziehen, wäre auch der BBA-Kolben blockiert und folglich auch die Funktion des BBA-Zylinders nicht mehr gegeben.

Zum manuellen Lösen der Federspeicherfeder ist ein daher eine manuell betätigbare Lösevorrichtung vorteilhaft, die es ermöglicht, die Federspeicherwirkung bei Druckverlust ohne Beeinträchtigung der BBA-Funktion aufzuheben. Ferner soll es möglich sein, nach dem Lösevorgang die FBA-Wirkung durch einen manuellen Vorgang wieder herzustellen. Dies wird dadurch erreicht, dass der manuell betätigbaren Lösevorrichtung eine ebenfalls manuell betätigbare Sperrvorrichtung zugeordnet ist. Die im Anschluss dargestellte und näher beschriebene Sperrvorrichtung basiert auf einem Ratschenmechanismus.

Der Ratschenmechanismus weist eine Lagerscheibe 132 auf, die mit der Gewindespindel 114 drehfest gekoppelt oder einstückig mit dieser ausgebildet ist. Sie ist mit Wälzkörpern 125 an einer Topfscheibe 135 abgestützt und je nach Funktionsstellung der Sperrvorrichtung, die zwischen diesen beiden Elementen 132, 135 wirkt, relativ zu dieser drehbar. Diese Lagerscheibe 132 weist eine Ausnehmung 119 für eine Sperrklinke 133 auf und einen Stift 137, der zur Drehmomentübertragung dient. Die Sperrklinke 133 ist drehbar in die Lagerscheibe 132 eingesetzt, durch einen angeformten Bolzen 120 mit der Steuerscheibe 134 verbunden und wird durch eine Blattfeder 138 radial nach außen gedrückt.

Der Ratschenmechanismus umfasst ferner eine Steuerscheibe 134 mit einer Steuerkontur 139, einem bogenförmigen Langloch 140 und einem mittig angeordneten sechskantförmigen Durchbruch.

Die Steuerkontur 139 dient zur Ein- und Ausschaltung der Sperrklinke 133. Das bogenförmige Langloch 140 dient dagegen ab einem bestimmten Winkelweg zur Übertragung des Drehmoments auf die Lagerscheibe 132. Der Innensechskant dient zur Einleitung des Drehmoments in die Steuerscheibe 134.

Ein profilierter Betätigungsdorn 136 dient zur Einleitung des manuell aufgebrachten Drehmoments.

Ferner dient er zur Ein- und Ausschaltung des Mechanismus. Der Betätigungsdorn 136 ist im Gehäuse 101 des Bremszylinders dreh und schwenkbar gelagert.

Der Ratschenmechanismus umfasst ferner die Topfscheibe 135 mit Innenverzahnung, welche mit der Sperrklinke 133 mit entsprechender Verzahnung beim manuellen Lösevorgang im Eingriff ist. Die Topfscheibe 135 stützt sich am Kolben 104 ab und ist relativ zu diesem nicht verdrehbar.

Da es sich um einen formschlüssigen Ratschenmechanismus handelt, ist eine sichere und schlupffreie Arretierung der Federspeicherfeder gewährleistet.

Die Funktion dieser Anordnung ist wie folgt

Beim manuellen Lösen der Federspeicherfeder 109 muss die Gewindespindel 114 mit Hilfe eines Schraubenschlüssels zurückgedreht werden.

Das Drehmoment wird dabei über den Betätigungsdorn 136 in die Steuerscheibe 134 übertragen. Durch das Verdrehen der Steuerscheibe 134 relativ zur Lagerscheibe 132 wird die Sperrklinke 133 durch die Steuerkontur 139 zum Eingriff in die Verzahnung der Topfscheibe 135 freigegeben. Die Sperrklinke 133 wird dabei durch die Blattfeder 138 elastisch gegen die Innenverzahnung der drehfesten Topfscheibe 135 gedrückt. Gleichzeitig wird nach der Überdrehung des Steuerwinkels über das bogenförmige Langloch 140 und einem entsprechenden Stift 137 in der Lagerscheibe 132 das Drehmoment von der Steuerscheibe 134 in die Lagerscheibe 132 und von dort in die Gewindespindel 114 übertragen.

Da die Sperrklinke 133 aufgrund der richtungsabhängigen Sperrwirkung ein selbsttätiges Zurückdrehen der Gewindespindel 114 verhindert, kann der Schraubenschlüssel ohne Aufdrehen der Gewindespindel 114 umgesetzt werden.

Dieser Vorgang kann solange wiederholt werden, bis die Federspeicherfeder die Lösestellung für die Feststellbremse erreicht hat.

Wenn die Federspeicherfeder von der Position "Federspeicher gelöst" manuell in die Position "Federspeicher eingelegt" gebracht werden soll, muss mit dem Schraubenschlüssel eine Drehbewegung in Sperrrichtung des Ratschenmechanismus ausgeführt werden. Dabei wird zunächst die Steuerscheibe 134 relativ zur Lagerscheibe 132 so weit verdreht, bis die Sperrklinke 133 durch die Steuerkontur 139 aus der Innenverzahnung der Topscheibe 135 gezogen wird. Sobald dieser Zustand erreicht wird, kann sich die Gewindespindel 114 verdrehen.

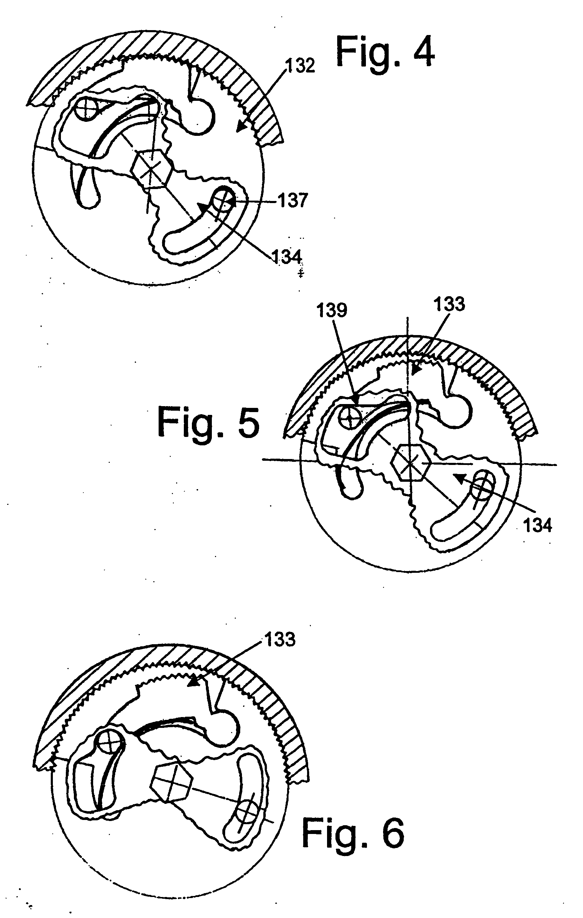

Fig. 5 zeigt ein derartiges manuelles Zustellen der Federspeicherbremse. Die Steuerscheibe 134 wird in dieser Figur nach links verdreht, wodurch die Sperrklinke 133 über die Kontur 139 aus der Verzahnung gezogen wird. Die Lagerscheibe 132 kann sich hierdurch bis zur nächsten Einrastung der Sperrklinke 133 drehen.

Da sich die Gewindespindel 114 schneller bewegt als die vom Schraubenschlüssel geführte Steuerscheibe 134 kommt es zu einer Relativbewegung zwischen Lagerscheibe 132 und Steuerscheibe 134 und folglich wieder zum Einrasten der Sperrklinke 133 in der Innenverzahnung der drehfesten Topfscheibe 135. Damit wird gewährleistet, dass sich die Gewindespindel 114 nur so weit und so schnell dreht, wie von der Drehbewegung des Schraubenschlüssels vorgegeben wird.

Hierzu ist es notwendig den Betätigungsdorn 136 mit Hilfe eines Schraubenschlüssels in Richtung "Federspeicherbremse einlegen" zu drehen bis eine weitere Drehung nicht mehr möglich ist. Dadurch wird erreicht, dass die Steuerscheibe 134 relativ zur Lagerscheibe 132 verdreht wird und der Schaltpin der Sperrklinke 133 in eine Einraststellung auf der Steuerkontur 139 gebracht wird.

In Fig. 6 ist die manuelle Lösevorrichtung in ihrer deaktivierten Stellung dargestellt. Die Sperrklinke 133 verharrt in ihrer Ruheposition.

Fig. 4 zeigt die Sperrstellung des Freilaufs. Die Lagerscheibe 132 wird durch die Steuerscheibe 134 über den Pin 137 nach rechts gedreht. Die Lagerscheibe 132 kann sich in dieser Stellung nicht selbsttätig nach links drehen.

Der Betätigungsdorn 136 steht beim manuellen Lösevorgang in Kontakt mit der manuellen Drehvorrichtung 127 zum Ansetzen eines Betätigungswerkzeuges, insbesondere eines Schraubenschlüssels. Die Drehvorrichtung 127 ist so gestaltet, dass z.B. beim Zurückdrehen, sprich Lösen des Federspeichers eine äußere Buchse 128 durch eine spezielle Formgebung in axialer Richtung einen Weg (Hub) ausführt, bis eine Drehmomenteinleitung möglich ist.

Durch diesen Axialhub ergibt sich zwischen der äußeren Buchse 128 und einem inneren Bolzen 129 stirnseitig eine Abstufung. Aufgrund dieser eindeutigen Konturänderung kann der manuelle Lösezustand der Federspeicherbremse visuell erkannt bzw. ertastet werden.

Da die Gewindespindel 114 über ein nicht selbst hemmendes Steilgewinde verfügt, wird zunächst beim Zudrehen des Federspeichers, also beim manuellen Einlegen der Federspeicherbremse, ein Drehmoment auf den Schraubenschlüssel ausgeübt, bis die Expansion der Federspeicherfeder 109 durch die Gegenkraft des Bremshebels zum Stillstand kommt. Wenn nun mit dem Schraubenschlüssel in Zustellrichtung der Federspeicherfeder 109 weitergedreht wird, wird die äußere Buchse 128 aus der stabilen "Lösestellung" in die Normalstellung (Federspeicher frei) gebracht und die stirnseitige Abstufung aufgehoben.

Nachfolgend wird das realisierte Konzept zur Ansteuerung des Kompaktkombizylinders näher beschrieben.

Dabei wird eine elektronische Steuerung vorzugsweise vermieden, um eine von der Bordspannung unabhängige Funktion zu gewährleisten.

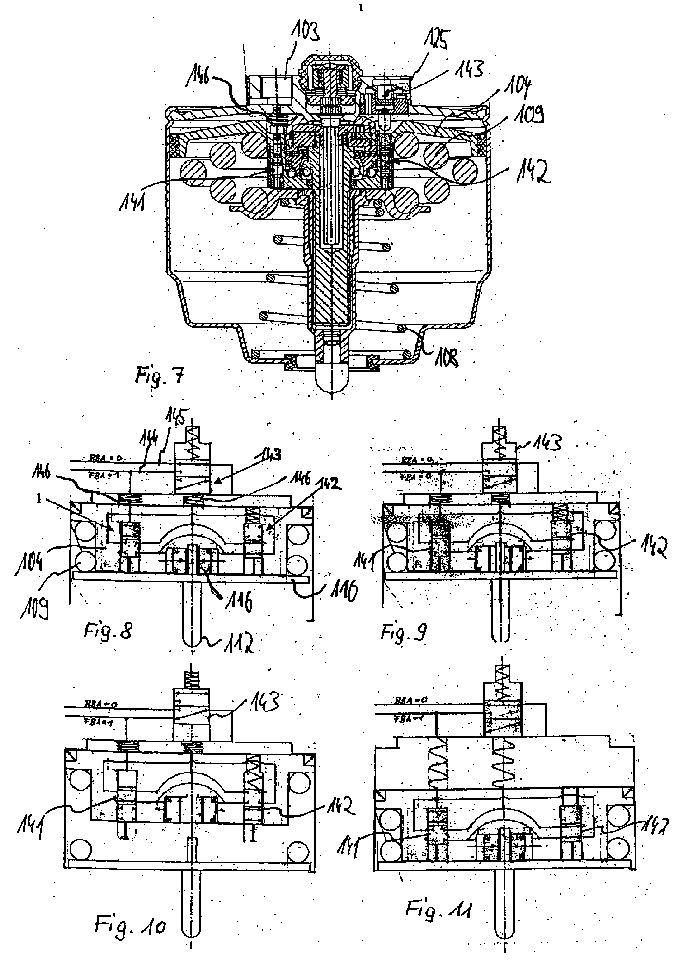

Fig. 7 zeigt eine Variante des Bremszylinders aus Fig. 1 mit einem weiteren Druckluftanschluss 125 und weiteren Details insbesondere von Elementen, welche der Ansteuerung des Bremszylinders dienen.

Diese Ansteuerung basiert auf einer logischen Verknüpfung von pneumatischen Schaltventilen.

Da für die Federspeicherfeder 109 kein eigener, von dem BBA unabhängiger, Lösekolben vorhanden ist, muss der (BBA-)Kolben 104 für eine kurze Zeit mit Druckluft beaufschlagt werden, damit die Federspeicherfeder 109 in die Stellung "FBA gelöst" gebracht und anschließend verriegelt werden kann.

Diese Druckluftbeaufschlagung erfolgt durch den Druckluftanschluss 103. Durch das anschließende Entlüften der BBA-Zuleitung wird mit Hilfe der Rückstellfeder 108 der Kolben 104 mit der komprimierten Federspeicherfeder 109 in die Ruhestellung gebracht und die Federspeicherbremse gelöst.

Dieser Funktionsablauf kann auf der Basis einer Schaltung entsprechend der beiliegenden Figuren realisiert werden.

Der Grundgedanke dieser Verschaltung ist eine Steuerung, die nicht zeitabhängig sondern positionsabhängig arbeitet.

Um dies zu erreichen ist es notwendig, die Position der Federspeicherfeder 109 gegenüber dem Zylinderkolben zu erfassen.

Hierzu werden wenigstens eins oder mehrere Schaltventile auf dem Zylinderkolben angeordnet.

Das Ausführungsbeispiel der Fig. 7 und 8 weist folgende Ventile auf:
- ein erstes auf dem (Zylinder-)Kolben 104 angeordnetes bzw., in diesen integriertes, mechanisch betätigtes 4/2 Wegeventil 141, mit Sperrfunktion im betätigten Zustand;
- ein zweites auf dem (Zylinder-)Kolben platziertes, mechanisch betätigtes 4/2 Wegeventil 142, mit Durchgangsfunktion im betätigten Zustand; und
- ein im Zylinderkörper integriertes, pneumatisch betätigtes3/2 Wegeventil 143, welches zur Umschaltung bezüglich Druckluftbeaufschlagung des Zylinderkolbens aus einem angeschlossenen FBA-Kreis (Leitung 144) oder einem angeschlossenen BBA-Kreis (Leitung 145)

Das 3/2 Wegeventil 143 ist mit den Leitungen 144, 145 verbunden und beispielhaft nach Art der Fig. 8 einerseits mit dem Ventil 141 und andererseits mit den Ventilen 141 und 142. Das Ventil 141 ist ebenfalls mit der FBA-Leitung 144 verbunden. Die Ventile 141 und 142 sind nach Art der Fig. 8 miteinander verschaltet und wiederum mit dem Sperrmechanismus 116 verbunden und damit im Zusammenspiel zum Beauf schlagen des Druckraums 124 mit Druckluft und zur Druckabsenkung in diesem Raum ausgelegt, so dass mit ihnen der Sperrmechanismus 116 lösbar und arretierbar ist.

Die Druckluftversorgung dieser mit dem Zylinderkolben beweglichen Ventile erfolgt vorzugsweise mittels flexibler Verbindungsleitungen 146.

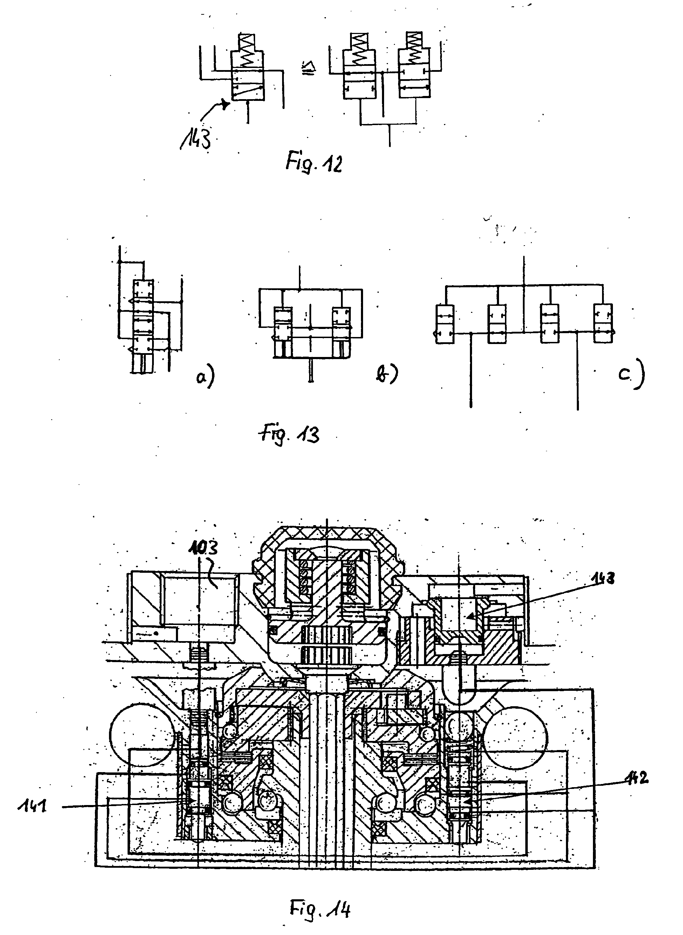

Grundsätzlich kann natürlich die Funktion auf mehr oder weniger Ventile aufgeteilt werden. Einige weitere Varianten sind in Fig. 12 und 13 schematisch dargestellt. Fig. 12 zeigt eine Ventilanordnung, welche die Funktion des 3/2 Wegeventils 143 ersetzt und Fig. 13a bis c zeigen alternative Ventilanordnungen, welche dazu ausgelegt sind, die Funktion der 3/2 Wegeventile 141 und/oder 142 zu ersetzen.

Nachfolgend sei die Funktion der Anordnung aus Fig. 7, 8 ff. bzw. 14 näher beschrieben.

Fig. 8 entspricht der gelösten Stellung des Federspeichers. In der Position "Federspeicher gelöst" ist das Umschaltventil 143 unbetätigt, da die Steuerleitung über Pneumatikventil 142 entlüftet ist und die Rückstellfeder somit das Pneumatikventil auf Durchgang BBA und Sperrung FBA schalten kann.

Ein Bremsvorgang mit der BBA ist damit ungehindert möglich.

Der auf dem FBA-Kreis anliegende Druck wird an die auf dem Zylinderkolben 104 sitzenden Schaltventile 141 und 142 über die flexible Druckluftverbindung 146 weitergeleitet.

Durch den Federteller bzw. den Federspeicherkolben 110, welche im gelösten Zustand der FBA-Bremse auf die Ventile 141 und 142 einwirkt, ist das Pneumatikventil "141" auf sperren und Pneumatikventil 142 auf "offen" gestellt. Über das Pneumatikventil "142" kann somit der Druck aus dem FBA Kreis an den Mechanismus für die FBA - Federarretierung geleitet werden. Die Ventile 141 und 142 weisen Kolbenstangen auf, welche aus dem Kolben 104 in Richtung des Federspeicherkolbens 110 vorstehen und von diesem in den Kolben 104 einschiebbar sind, wodurch ihre Funktionsstellung in Abhängigkeit vom Ort des Federspeicherkolbens 110 relativ zum Kolben 104 veränderlich ist.

Um den Federspeicher FBA einzulegen (Fig. 9), wird die FBA-Zuleitung 144 über ein an sich bekanntes Feststellbremsventil der Bremssteuerung (hier nicht dargestellt) entlüftet und der Mechanismus für die FBA-Federarretierung gelöst. Die Federspeicherfeder 109 kann somit expandieren und eine Kraft auf den Bremshebel (hier nicht dargestellt) ausüben.

Das Lösen der Feststellbremse wird aus dem Zusammenspiel der Fig. 10 zu Fig. 11 zu Fig. 8 ersichtlich.

Da die Federspeicherfeder 109 expandiert ist, sind die Schaltventile 141 und 142 durch den Federteller bzw. Federspeicherkolben 110 nicht betätigt.

Über die FBA Zuleitung 144 wird Druck aufgebaut. Das Schaltventil 141 wird somit auf Durchgang geschaltet. Das Schaltventil 142 ist durch die Rückstellfeder 108 auf "Sperren" gestellt.

Über das Schaltventil 141 wird nun das Umschaltventil 143 angesteuert und so geschaltet, dass der Druck aus der FBA-Zuleitung 144 den Zylinderkolben beaufschlagen kann.

Durch den Zylinderkolben 104 wird nun die Federspeicherfeder 109 solange zusammengedrückt, bis der Federteller 110 die Ausgangsposition erreicht hat.

In dieser Position werden das Schaltventil 141 und 142 durch den Federteller bzw. Federspeicherkolben 110 betätigt und auf Sperrung (Ventil 141) bzw. Durchgang (Ventil 142) geschaltet. Dadurch wird einerseits die Steuerleitung des Umschaltventils 143 über das Schaltventil 142 entlüftet und andererseits der Federarretiermechanismus ebenfalls über das Schaltventil 142 mit Druckluft versorgt.

Über die Rückstellfeder 108 kann nun der über das Umschaltventil 143 und die entlüf tete BBA-Zuleitung 145 entlüftete Zylinderkolben 104 mit der in "Stellung gelöst" arretierten Federspeicherfeder 109 in die Ruhestellung zurückgeführt werden.

### Bezugszeichenliste

- Kompaktbremszylinder: 100
- Gehäuse: 101
- Deckel: 102
- Druckluftanschlüsse: 103
- Kolben: 104
- Umfangsdichtring: 105
- Druckraum: 106
- Raum: 107
- Rückholfeder: 108
- Federspeicherfeder: 109
- Federspeicherkolben: 110
- Kragen: 111
- Kolbenstange: 112
- Öffnung: 113
- Gewindespindel: 114
- Sperrmechanismus: 116
- Aufnahmeraum: 117
- Wälzkörper: 118
- Ausnehmung: 119
- Bolzen: 120
- Sperrmechanismuskolben: 121
- Kolbendichtungen: 122, 123
- Druckraum: 124
- Wälzkörper: 125
- Drehvorrichtung: 127
- Buchse: 128
- Bolzen: 129
- Lagerscheibe: 132
- Sperrklinke: 133
- Steuerscheibe: 134
- Topfscheibe: 135
- Betätigungsdorn: 136
- Stift: 137
- Blattfeder: 138
- Steuerkontur: 139
- Langloch: 140
- 4/2 Wegeventil: 141
- 4/2 Wegeventil: 142
- 3/2 Wegeventil: 143
- FBA-Leitung: 144
- BBA-Leitung: 145

## Patentansprüche

1. Bremszylinder für pneumatisch betätigte Fahrzeugbremsen, insbesondere für Nutzfahrzeuge, mit
a. einem Federspeicherbremsabschnitt zur Durchführung von Feststellbremsvorgängen mittels einer Federspeicherfeder (109), und einem Betriebsbremsabschnitt zur Durchführung druckluftbetätigter Betriebsbremsungen, wobei der Federspeicherbremsabschnitt und der Betriebsbremsabschnitt zu einer baulichen Einheit in einem Gehäuse (101) zusammengefasst sind,
b. wobei das Gehäuse (101) von einem Kolben (104) in zwei Räume (106, 107) unterteilt ist, von denen der eine der beiden Räume (106) als Druckraum zum Betätigen des Betriebsbremsabschnittes dient, und wobei die Federspeicherfeder (109) des Federspeicherabschnittes in dem weiteren Raum (107) auf der gegenüberliegenden Seite des Kolbens (104) angeordnet ist,
c. wobei die Federspeicherfeder (109) auf einen weiteren Federspeicherkolben (110) im Raum (107) wirkt, der mittels eines pneumatisch betätigbaren Sperrmechanismus (116) gegenüber dem Kolben (104) arretierbar und durch Lösen des Sperrmechanismus von diesem lösbar ist, und der direkt oder über weitere Elemente mit einer Kolbenstange (112) zum Betätigen der Fahrzeugbremse verbunden ist,
d. wobei nach dem Lösen des Sperrmechanismus (116) die Federspeicherfeder (109) zwischen den beiden Kolben (104, 110) wirkt und diese bei einer Feststellbremsung relativ zueinander verschiebt,
e. wobei in den Bremszylinder wenigstens eines oder mehrere Pneumatikventil(e) (1412, 142, 143) zur Ansteuerung des Bremszylinders integriert ist/sind,
**dadurch gekennzeichnet, dass**
f. in den Bremszylinder wenigstens ein in Abhängigkeit vom Ort der Speicherfeder bei Bremsungen betätigtes Pneumatikventil (141, 142) zur Ansteuerung des Bremszylinders integriert ist.

2. Bremszylinder nach Anspruch 1, **dadurch gekennzeichnet, dass** der Bremszylinder zu seiner Ansteuerung allein mit rein pneumatisch/mechanisch betätigbaren bzw. arbeitenden Pneumatikventilen (141, 142, 143) versehen ist, so dass auch ohne eine Stromversorgung des Zylinders unterschiedliche Betriebssituationen realisierbar sind.

3. Bremszylinder nach einem der vorstehenden Ansprüche, **dadurch gekennzeichnet, dass** der durch die Federspeicherfeder (109) belastete Federspeicherkolben (110) mit einer Gewindespindel (114) in Eingriff steht, die mit einer Bremse oder Kupplung (116) als pneumatisch betätigbarer Sperrmechanismus in Wirkverbindung steht, so dass im Lösezustand des Bremszylinders die Spindel (114) gegen Drehung gesichert ist, und dass durch Verringerung oder Aufhebung des Eingriffs der Bremse oder Kupplung (116) die Gewindespindel (114) drehfähig ist, so dass durch die Entspannung der Federspeicherfeder (109) der Federspeicherkolben (110) in Längsrichtung der Gewindespindel (114) verfahrbar ist.

4. Bremszylinder nach einem der vorstehenden Ansprüche, **dadurch gekennzeichnet, dass** in den Bremszylinder Pneumatikventile integriert sind, welche dazu ausgelegt sind, in Abhängigkeit von der Position der Federspeicherfeder (109) in verschiedene Betriebszustände bewegt zu werden.

5. Bremszylinder nach einem der vorstehenden Ansprüche, **dadurch gekennzeichnet, dass** direkt in den Kolben (104) wenigstens eines oder mehrere Pneumatikventile integriert sind, welche dazu ausgelegt sind, in Abhängigkeit von der Position der Federspeicherfeder (109) in verschiedene Betriebszustände bewegt zu werden.

6. Bremszylinder nach einem der vorstehenden Ansprüche, **dadurch gekennzeichnet, dass** direkt in den Kolben (104) wenigstens eines oder mehrere Pneumatikventile integriert sind, welche dazu ausgelegt sind, von dem Federspeicherfederkolben in Abhängigkeit von der Position der Federspeicherfeder (109) in verschiedene Betriebszustände bewegt zu werden.

7. Bremszylinder nach einem der vorstehenden Ansprüche, **dadurch gekennzeichnet, dass** an den Bremszylinder eine FBA-Kreis-Druckluftleitung 144) und eine BBA-Kreis-Druckluftleitung (145) anschließbar sind.

8. Bremszylinder nach einem der vorstehenden Ansprüche, **gekennzeichnet durch** folgende Ventile:
a. ein erstes auf dem (Zylinder-)Kolben (104) angeordnetes bzw. in diesen integriertes, mechanisch betätigtes 4/2 Wegeventil (141), mit Sperrfunktion im betätigten Zustand ;
b. ein zweites auf dem (Zylinder-)Kolben platziertes, mechanisch betätigtes 4/2 Wegeventil (142), mit Durchgangsfunktion im betätigten Zustand; und
c. ein im Zylinderkörper integriertes, pneumatisch betätigtes 3/2 Wegeventil (143) zur Umschaltung bezüglich Druckluftbeaufschlagung des Zylinderkolbens aus dem angeschlossenen FBA-Kreis (Leitung 144) oder dem angeschlossenen BBA-Kreis (Leitung (145).

9. Bremszylinder nach einem der vorstehenden Ansprüche, **gekennzeichnet durch** wenigstens eine oder mehrere flexible Verbindungsleitungen (146) zur Druckluftversorgung der mit dem Zylinderkolben beweglichen Ventile.

10. Bremszylinder nach einem der vorstehenden Ansprüche, **dadurch gekennzeichnet, dass** der Bremszylinder neben dem pneumatisch betätigbaren Sperrmechanismus eine manuell betätigbare Lösevorrichtung zum manuellen Lösen des Federspeicherbremsabschnittes ohne Beeinträchtigung der Funktion des Betriebsbremsabschnittes aufweist.

11. Verfahren zur Ansteuerung des Bremszylinders nach einem der vorstehenden Ansprüche, **dadurch gekennzeichnet, dass** die Ansteuerung mittels in den Bremszylinder integrierte Pneumatikventile (141, 142, 143), welche dazu ausgelegt sind, in Abhängigkeit von der Position der Federspeicherfeder (109) in verschiedene Betriebszustände bewegt zu werden.

12. Verfahren nach Anspruch 11, **dadurch gekennzeichnet, dass** die Ansteuerung des Bremszylinders ortsabhängig insbesondere in Abhängigkeit von der Position der Speicherfeder erfolgt.

## Claims

1. Brake cylinder for pneumatically actuated vehicle brakes, in particular for commercial vehicles, having
a. a spring force accumulator brake section for carrying out parking brake operations by means of a spring force accumulator spring (109), and a service brake section for carrying out service brake operations which are actuated by compressed air, the spring force accumulator brake section and the service brake section being combined in a housing (101) to form one structural unit,
b. the housing (101) being divided by a piston (104) into two spaces (106, 107), of which one of the two spaces (106) serves as pressure space for actuating the service brake section, and the spring force accumulator spring (109) of the spring force accumulator section being arranged in the further space (107) on the opposite side of the piston (104),
c. the spring force accumulator spring (109) acting in the space (107) on a further spring force accumulator piston (110) which can be locked with respect to the piston (104) by means of a pneumatically actuable locking mechanism (116) and can be released from the locking mechanism by release of the latter, and which is connected directly or via further elements to a piston rod (112) for actuating the vehicle brake,
d. after the release of the locking mechanism (116), the spring force accumulator spring (109) acting between the two pistons (104, 110) and displacing them relative to one another in the case of a parking brake operation,
e. at least one or more pneumatic valves (1412, 142, 143) being integrated into the brake cylinder in order to actuate the brake cylinder,
**characterized in that**
f. at least one pneumatic valve (141, 142) which is actuated as a function of the location of the accumulator spring in the case of braking operations is integrated into the brake cylinder in order to actuate the brake cylinder.

2. Brake cylinder according to Claim 1, **characterized in that**, for its actuation, the brake cylinder is provided only with purely pneumatically/mechanically actuable or operating pneumatic valves (141, 142, 143), with the result that different operating situations can be realized even without a current supply of the cylinder.

3. Brake cylinder according to one of the preceding claims, **characterized in that** the spring force accumulator piston (110) which is loaded by the spring force accumulator spring (109) is in engagement with a threaded spindle (114) which is operatively connected to a brake or clutch (116) as pneumatically actuable locking mechanism, with the result that the spindle (114) is secured against rotation in the release state of the brake cylinder, and that the threaded spindle (114) is capable of rotation as a result of reduction or cancelation of the engagement of the brake or clutch (116), with the result that the spring force accumulator piston (110) can be moved in the longitudinal direction of the threaded spindle (114) as a result of the relief of the spring force accumulator spring (109).

4. Brake cylinder according to one of the preceding claims, **characterized in that** pneumatic valves are integrated into the brake cylinder, which pneumatic valves are designed to be moved into different operating states as a function of the position of the spring force accumulator spring (109).

5. Brake cylinder according to one of the preceding claims, **characterized in that** at least one or more pneumatic valves is/are integrated directly into the piston (104), which at least one or more pneumatic valves is/are designed to be moved into different operating states as a function of the position of the spring force accumulator spring (109).

6. Brake cylinder according to one of the preceding claims, **characterized in that** at least one or more pneumatic valves is/are integrated directly into the piston (104), which at least one or more pneumatic valves is/are designed to be moved into different operating states as a function of the position of the spring force accumulator spring (109).

7. Brake cylinder according to one of the preceding claims, **characterized in that** a PBS circuit compressed air line (144) and an SBS circuit compressed air line (145) can be connected to the brake cylinder.

8. Brake cylinder according to one of the preceding claims, **characterized by** the following valves:
a. a first mechanically operated 4/2-way valve (141) which is arranged on the (cylinder) piston (104) or is integrated into the latter, with a locking function in the actuated state;
b. a second mechanically actuated 4/2-way valve (142) which is placed on the (cylinder) piston, with a pass-through function in the actuated state; and
c. a pneumatically actuated 3/2-way valve (143) which is integrated into the cylinder body for switching over with regard to loading with compressed air of the cylinder piston from the connected PBS circuit (line 144) or the connected SBS circuit (line 145).

9. Brake cylinder according to one of the preceding claims, **characterized by** at least one or more flexible connecting lines (146) for supplying compressed air to the valves which can be moved with the cylinder piston.

10. Brake cylinder according to one of the preceding claims, **characterized in that**, in addition to the pneumatically actuable locking mechanism, the brake cylinder has a manually actuable release device for manually releasing the spring force accumulator brake section without impairing the function of the service brake section.

11. Method for actuating the brake cylinder according to one of the preceding claims, **characterized in that** the actuation takes place by means of pneumatic valves (141, 142, 143) which are integrated into the brake cylinder and are designed to be moved into different operating states as a function of the position of the spring force accumulator spring (109).

12. Method according to Claim 11, **characterized in that** the actuation of the brake cylinder takes place as a function of the location, in particular as a function of the position of the accumulator spring.

## Revendications

1. Cylindre de frein pour des freins de véhicules actionnés pneumatiquement, notamment pour des véhicules utilitaires, comprenant
a. une section de frein à ressort accumulateur pour effectuer des opérations de frein de stationnement au moyen d'un ressort (109) accumulateur et une section de frein de service pour effectuer des freinages de service actionnés par de l'air comprimé, la section de frein à ressort accumulateur et la section de frein de service étant rassemblées en une unité de construction dans une enveloppe (101),
b. dans lequel l'enveloppe (101) est subdivisée par un piston (104) en deux chambres (106, 107), dont la première (106) sert de chambre de pression pour l'actionnement de la section de frein de service, tandis que le ressort (109) accumulateur de la section à ressort accumulateur est disposé dans l'autre chambre (107) du côté opposé du piston (104),
c. dans lequel le ressort (109) accumulateur agit dans la chambre (107) sur un autre piston (110) de ressort accumulateur, qui, au moyen d'un mécanisme (116) de blocage pouvant être actionné pneumatiquement, peut être arrêté par rapport au piston (104) et, par relâchement du mécanisme de blocage, peut en être relâché et, pour l'actionnement du frein du véhicule, est relié directement ou par d'autres éléments à une tige (112) de piston,
d. dans lequel, après le déblocage du mécanisme (116) de blocage, le ressort (109) accumulateur agit entre les deux pistons (104, 110) et les déplace l'un par rapport à l'autre pour un freinage de stationnement,
e. dans lequel, dans le cylindre de frein, est intégrée ou sont intégrées, pour la commande du cylindre de frein, au moins une soupape ou plusieurs soupapes (1412, 142, 143) pneumatiques,
**caractérisé en ce que**
f. dans le cylindre de frein, est intégrée, pour la commande du cylindre de frein, au moins une soupape (141, 142) pneumatique actionnée aux freinages en fonction de l'emplacement du ressort accumulateur.

2. Cylindre de frein suivant la revendication 1, **caractérisé en ce que** le cylindre de frein est pourvu, pour sa commande, seulement de soupapes (141, 142, 143) pneumatiques actionnables ou travaillant seulement d'une façon purement pneumatique/mécanique, de sorte que, même sans une alimentation en courant du cylindre, des situations de fonctionnement différentes peuvent être réalisées.

3. Cylindre de frein suivant l'une des revendications précédentes, **caractérisé en ce que** le piston (110) du ressort accumulateur soumis à l'action du ressort (109) accumulateur est en prise avec une broche (114) filetée, qui coopère avec un frein ou un accouplement (116) comme mécanisme de blocage pouvant être actionné mécaniquement, de sorte que, à l'état desserré du cylindre de frein, la broche (114) est empêchée de tourner, et **en ce que**, en diminuant ou en faisant cesser la prise du frein ou de l'accouplement (116), la broche (114) filetée peut tourner, de sorte que, par la détente du ressort (109) accumulateur, le piston (110) de ressort accumulateur peut être déplacé dans la direction longitudinale de la broche (114) filetée.

4. Cylindre de frein suivant l'une des revendications précédentes, **caractérisé en ce que** sont intégrées, dans le cylindre de frein, des soupapes pneumatiques conçues pour être mises en des états de fonctionnement différents en fonction de la position du ressort (109) accumulateur.

5. Cylindre de frein suivant l'une des revendications précédentes, **caractérisé en ce que** sont intégrées directement, dans le piston (104), au moins une ou plusieurs soupapes pneumatiques conçues pour être mises dans des états de fonctionnement différents en fonction de la position du ressort (109) accumulateur.

6. Cylindre de frein suivant l'une des revendications précédentes, **caractérisé en ce que** sont intégrées directement, dans le piston (104), au moins une ou plusieurs soupapes pneumatiques conçues pour être mises dans des états de fonctionnement différents par le piston de ressort accumulateur en fonction de la position du ressort (109) accumulateur.

7. Cylindre de frein suivant l'une des revendications précédentes, **caractérisé en ce qu'**au cylindre de frein peuvent se raccorder un conduit (144) pour de l'air comprimé de circuit de frein de stationnement et un conduit (145) pour de l'air comprimé de circuit de frein de service.

8. Cylindre de frein suivant l'une des revendications précédentes, **caractérisé par** les soupapes suivantes :
a. une première soupape (141) 4/2 voies disposée sur le piston (104) de cylindre ou intégrée dans celui-ci et actionnée mécaniquement, ayant une fonction d'arrêt dans l'état actionné ;
b. une deuxième soupape (142) 4/2 voies placée sur le piston de cylindre et actionnée mécaniquement, ayant une fonction de passage dans l'état actionné et
c. une soupape (143) 3/2 voies intégrée dans le corps du cylindre et actionnée mécaniquement pour la commutation en ce qui concerne l'alimentation en air comprimé du piston de cylindre hors du circuit raccordé de frein de stationnement (conduit 144) ou du circuit raccordé de frein de service (conduit 145).

9. Cylindre de frein suivant l'une des revendications précédentes, **caractérisé par** un ou plusieurs conduits (146) souples de liaison pour alimenter en air comprimé les soupapes mobiles avec le piston de cylindre.

10. Cylindre de frein suivant l'une des revendications précédentes, **caractérisé en ce que** le cylindre de frein a, sans porter atteinte au fonctionnement de la section de frein de service, outre le mécanisme de blocage pouvant être actionné pneumatiquement, un dispositif de desserrage pouvant être actionné manuellement pour desserrer manuellement la section de frein à ressort accumulateur.

11. Procédé de commande du cylindre de frein suivant l'une des revendications précédentes, **caractérisé en ce que** la commande s'effectue au moyen de soupapes (141, 142, 143) pneumatiques intégrées dans le cylindre de frein et conçues pour être mises dans des états de fonctionnement différents en fonction de la position du ressort (109) accumulateur.

12. Procédé suivant la revendication 11, **caractérisé en ce que** la commande du cylindre de frein s'effectue en fonction d'un emplacement, notamment en fonction de la position du ressort accumulateur.
